(19) Europäisches Patentamt
European Patent Office
Office européen des brevets

(11) Veröffentlichungsnummer: **0 414 099 A2**

# (12) EUROPÄISCHE PATENTANMELDUNG

(21) Anmeldenummer: **90115562.2**

(22) Anmeldetag: **14.08.90**

(51) Int. Cl.5: **C08G 18/08**, C08G 18/32, C08G 18/67

(30) Priorität: **22.08.89 DE 3927632**

(43) Veröffentlichungstag der Anmeldung: **27.02.91 Patentblatt 91/09**

(84) Benannte Vertragsstaaten: **AT BE CH DE DK ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Seitz, Friedrich, Dr.**
**Von-Wieser-Strasse 1**
**D-6701 Friedelsheim(DE)**
Erfinder: **Beck, Erich, Dr.**
**Konrad-Adenauer-Strasse 15**
**D-6721 Harthausen(DE)**
Erfinder: **Roser, Joachim, Dr.**
**Saarlandstrasse 40**
**D-6700 Ludwigshafen(DE)**
Erfinder: **Schulz, Guenther, Dr.**
**Im Roehrich 45**
**D-6702 Bad Duerkheim(DE)**
Erfinder: **Bueschges, Eleonore, Dr.**
**Schauinslandstrasse 9**
**D-6800 Mannheim 1(DE)**
Erfinder: **Zwez, Thomas, Dr.**
**Allmendstrasse 8**
**D-7500 Karlsruhe 51(DE)**

## (54) Umsetzungsprodukt, Verfahren zu dessen Herstellung und damit erhaltenes strahlungsempfindliches material.

(57) Die Erfindung betrifft ein Harnstoff- und Urethangruppen sowie Carboxylgruppen enthaltendes Umsetzungsprodukt, das durch Umsetzung von

i) einem ein- oder mehrfach ethylenisch ungesättigten Mono- oder Polyalkohol
mit
ii) einem Di- oder Polyisocyanat,
iii) mindestens einer Aminoverbindung
und
iv) mindestens einem Säureanhydrid einer mindestens zweiwertigen Carbonsäure, wobei die Summe der NCO- und Anhydridgruppen in ii) und iv) kleiner oder gleich der Zahl der damit reaktiven Gruppen in i) und iii) ist,

erhalten worden ist.

Dieses Umsetzungsprodukt eignet sich zur Herstellung strahlungsempfindlicher Materialien, insbesondere solcher Materialien, deren Löslichkeit in Wasser oder wäßrig-alkalischen Lösungen durch Bestrahlung zunimmt.

EP 0 414 099 A2

# UMSETZUNGSPRODUKT, VERFAHREN ZU DESSEN HERSTELLUNG UND DAMIT ERHALTENES STRAHLUNGSEMPFINDLICHES MATERIAL

Die Erfindung betrifft ein Harnstoff- und Urethangruppen sowie Carboxylgruppen enthaltendes ethylenisch ungesättigtes Umsetzungsprodukt, Verfahren zu dessen Herstellung und ein damit erhältliches strahlungsempfindliches Material. Insbesondere betrifft die Erfindung solche strahlungsempfindlichen Gemische, deren Löslichkeit in Nasser oder wäßrig-alkalischen Lösungen bei Bestrahlung zunimmt.

Positiv arbeitende lichtempfindliche zusammensetzungen, d.h. Verbindungen oder Gemische von Verbindungen, deren Löslichkeit in einem vorgegebenen Lösungsmittel bei Bestrahlung zunimmt, sind an sich bekannt. Die in der Reproduktionstechnik am häufigsten eingesetzten Verbindungen sind Naphthochinondiazide oder deren Derivate (vgl. W. Fraß, Chemie in unserer Zeit, 17 (1983) 10; H. W. Vollmann, Angew. Chem. 92 (1980) 95). Bei Bestrahlung dieser Verbindungen wird über Stickstoffabspaltung und Wolff-Umlagerung aus einer hydrophoben Diazoketon-Einheit eine Carboxylgruppe gebildet, die die genannten Verbindungen bzw. die aus diesen Verbindungen hergestellten Mischungen in wäßrig-alkalischen Lösungen löslich macht.

Eine weitere Verbindungsklasse, die sich zur Herstellung von positiv arbeitenden lichtempfindlichen Gemischen eignet, sind aromatische oder heteroaromatische Nitroverbindungen. Während die oben beschriebenen Verbindungen mit Diazoketon-Struktur in den lichtempfindlichen Gemischen meist als niedermolekulare Verbindungen vorliegen, können als lichtempfindliche Nitroverbindungen sowohl niedermolekulare Verbindungen (DE-A-22 07 574, US-A-4 181 531) als auch Polymere aus Monomeren mit o-Nitrocarbinolester-Struktur bzw. Copolymere dieser Monomeren mit anderen Vinylverbindungen verwendet werden (vgl. DE-A-21 50 691, DE-A-29 22 746 und EP-A-19 770). Auch hier wird bei Bestrahlung eine Carboxylgruppe gebildet, die die Löslichkeit der Gemische in wäßrigalkalischen Lösungen erhöht.

Auf einem ähnlichen Prinzip dürften die Positivsysteme beruhen, die z. B. in US-A-4 469 774 beschrieben sind und photochemisch spaltbare Benzoinester in der Seitenkette enthalten.

Ein weiteres Verfahren, das auf der Erhöhung der Löslichkeit durch Carboxylgruppen beruht, ist zum Beispiel in EP-A-62 474, EP-A-99 949 oder US-A-4 415 652 beschrieben. Hier wird ein Gemisch aus einem in wäßriger Lösung unlöslichen Bindemittel, einer Mercaptocarbonsäure und einem bei Bestrahlung Radikale bildenden Initiatorsystem beansprucht. Die Bestrahlung führt zu einer radikalischen Pfropfung der Mercaptocarbonsäure auf das Bindemittel, das dadurch in wäßrig-alkalischen Lösungen löslich wird.

Bei photoempfindlichen Mischungen, die nach einem der oben beschriebenen Prinzipien aufgebaut sind, wird pro absorbiertem Lichtquant nur maximal eine Carboxylgruppe erzeugt bzw. auf das Bindemittel gepfropft. Meist liegt die Quantenausbeute noch deutlich unter 1. Daher sind in allen Fällen lange Belichtungszeiten erforderlich, die erreichte Löslichkeitsdifferenzierung ist dennoch meist schlecht. Von den genannten photoempfindlichen Systemen konnten sich daher nur die auf der Basis der Wolff-Umlagerung von Diazoketonen funktionierenden auf dem Markt behaupten, und auch diese nur im Bereich der Positiv-Offset-Platten bzw. der Positivresiste für die Herstellung integrierter Schaltungen. Für andere Produkte, von denen insbesotidere Photoresistfilme für die Leiterplattenfertigung genannt seien, sind die erforderlichen langen Belichtungszeiten und die wegen der geringen Löslichkeitsdifferenzierung erforderlichen halbwäßrigen Entwicklerlösungen unakzeptabel. Das Problem der Entsorgung der Entwicklerlösungen wird in Zukunft noch an Bedeutung gewinnen.

Eine prinzipiell andere Möglichkeit, die Löslichkeit einer photoempfindlichen Schicht durch Belichtung zu erhöhen, besteht darin, die Zusammensetzung der Schicht so zu wählen, daß bei Bestrahlung das mittlere Molekulargewicht des Bindemittels abnimmt. Hierzu werden durch aktinisches Licht spaltbare Gruppen in die Hauptkette eines Polymeren eingebaut. Beispiele für solche Systeme sind z. B. Polyoxymethylen-Polymere, die in der Hauptkette Acetaleinheiten, die aus o-Nitrobenzaldehyd oder Derivaten des o-Nitrobenzaldehyds gebildet sind, enthalten. Solche Polymere und aus ihnen hergestellte lichtempfindliche Schichten sind z. B. in US-A-3 991 033 und US-A-4 189 611 beschrieben. Auf ähnliche Weise können Acetale des o-Nitrobenzaldehyds auch in die Hauptkette von Polymeren eingebaut werden, die im wesentlichen einen Polyester aus einer Dicarbonsäure und einem difunktionellen Alkohol darstellen (vgl. US-A-4 086 210). Andere Polymere, die bei Bestrahlung unter Spaltung der Hauptkette und damit einer Verringerung des Molekulargewichts reagieren, sind Polymere, die in ihrer Hauptkette Hexaarylbisimidazoleinheiten enthalten (vgl. US-A-4 009 040).

Als eine Kombination aus Hauptkettenabbau und Pfropfung einer Carboxylgruppe läßt sich das in EP-A-57 162 beschriebene Verfahren verstehen, in dem neben einem Polymeren, das in der Hauptkette Benzoineinheiten enthält, ungesättigte Carbonsäuren vorliegen. Bei Belichtung werden die Benzoineinheiten unter Verringerung des mittleren Molekulargewichts gespalten. Gleichzeitig werden die ungesättigten Carbonsäuren an die an den Spaltstellen entstehenden Radikale addiert und erhöhen so ebenfalls die Löslichkeit in wäßrig-alkalischer Lösung.

Auch die auf dem Hauptkettenabbau eines geeigneten Polymeren nach einem der oben beschriebenen Prinzipien basierenden positiv arbeitenden photoempfindlichen Schichten weisen nur eine geringe Lichtempfindlichkeit auf. Zudem ist in vielen Fällen nach der Belichtung eine thermische Nachbehandlung nötig In der Praxis konnte sich daher keines der beschriebenen Verfahren durchsetzen.

Man hat daher versucht, die hohe Lichtempfindlichkeit photopolymerisierbarer Schichten für die Herstellung positiv arbeitender Schichten zu nutzen, indem man durch Belichtung durch eine Vorlage bildmäßig einen Polymerisationsinhibitor erzeugt und dann in einem zweiten, nicht notwendigerweise bildmäßigen Belichtungsschritt die nicht inhibierten Stellen polymerisiert. Als Verbindungen, aus denen durch Belichtung Polymerisationsinhibitoren erzeugt werden können, wurden z. B. Nitrosodimere (vgl. DE-A-25 42 151) oder gewisse o-Nitroaromaten vorgeschlagen (vgl. DE-A-27 10 417 und EP-A-103 197). Bei diesen Verfahren ist in jedem Fall ein zusätzlicher Belichtungsschritt nötig, so daß die Gesamtprozeßzeit gegenüber anderen Positivsystemen eher erhöht wird.

Der bisher erfolgreichste Versuch, die Lichtempfindlichkeit positiv arbeitender lichtempfindlicher Schichten zu erhöhen, ist unter dem Begriff der chemischen Verstärkung bekannt geworden. Hier wird bei Belichtung ein Katalysator erzeugt, der in einem zweiten, thermischen Verfahrensschritt eine Reaktion beschleunigt, die letztlich zu einer Erhöhung der Löslichkeit der photoempfindlichen Schicht führt. Bei dem Katalysator handelt es sich meist um eine starke Säure, die photochemisch z. B. aus einer organischen Halogenverbindung, vor allem einer halogenhaltigen Triazinverbindung (vgl. z B. DE-A-23 06 248), einer aromatischen Nitroverbindung (vgl. z. B. EP-A-78 981), einem Diazoniumsalz oder einem aromatischen Iodonium- bzw. Sulfoniumsalz (vgl. z. B. DE-A-36 20 677 und US-A-4 491 628) gebildet wird. Die gebildete Säure wird benutzt, um im zweiten, thermischen Verfahrensschritt säurelabile Bindungen zu spalten. Je nach verwendeter säurelabiler Verbindung kann diese Spaltung entweder die Bildung einer hydrophilen aus einer hydrophoben Gruppe (vgl. z. B. DE-A-36 20 677 und US-A-4 491 628) oder einen Abbau des Nolekulargewichts bewirken. Für den letzten Fall geeignete säurelabile Gruppen sind z. B. Acetal- (vgl. DE-A-23 06 248, EP-A-78 981, EP-A-82 463 und US-A-3 779 778), Orthocarbonsäureester- (vgl. EP-A-78 981 und EP-A-82 463), Enolether- (vgl. EP-A-6 627 und EP-A-82 463), Silylether- (vgl. DE-A-35 44 165 und EP-A-130 599) oder Silylestergruppen (vgl. EP-A-130 599). Obwohl mit diesen Gemischen Lichtempfindlichkeiten erreicht werden können, die in günstigen Fällen denen negativ arbeitender Schichten entsprechen, haben Produkte, die nach dem Prinzip der chemischen Verstärkung aufgebaut sind, nur im Bereich der Resiste für die Herstellung integrierter Schaltungen Bedeutung erlangt. In anderen Einsatzgebieten wird der erforderliche zusätzliche thermische Verfahrensschritt nicht akzeptiert.

Ein weiterer Typ eines positiv arbeitenden lichtempfindlichen Gemisches wird in EP-A-106 156 beschrieben. Dieses Gemisch besteht aus einem Polykondensat mit bestimmten Gruppen in der Hauptkette und ungesättigten Gruppen am Kettenende in Kombination mit einem Photoinitiator. Als die Hauptkette aufbauende Gruppen werden aromatische Kohlenwasserstoff-, Diarylether-, Diarylsulfid-, Diarylsulfon-, Diarylamin-, Diarylketon- und Diaryldiketongruppen genannt. Endgruppen sind Alkenylgruppen oder Reste ungesättigter Carbonsäuren. Als Ursache für die Erhöhung der Löslichkeit bei Belichtung wird ein radikalisch induzierter Kettenabbau vermutet. Trotz eines sehr hohen Initiatoranteils von typischerweise 25 Gew.% werden nur mäßige Lichtempfindlichkeiten erreicht.

Die Verwendung bestimmter Vinyl- und Carboxylgruppen enthaltender Urethanverbindungen als Rohstoffe in Photoresistlacken ist an sich bekannt. Dabei handelt es sich jedoch stets um Systeme, deren Löslichkeit nach Belichtung abnimmt, also um negativ arbeitende Systeme.

So sind in der DE-A-25 57 408 Vinyl- und Carboxylgruppen enthaltende Urethanverbindungen beschrieben, die durch Umsetzung von polyfunktionellen $\beta$-Hydroxyalkylacrylverbindungen mit einem Isocyanat, das im Unterschuß eingesetzt wird, und anschließende Addition der überschüssigen Hydroxylgruppen mit einem cyclischen Dicarbonsäureanhydrid erhalten werden.

Weitere ungesättigte, COOH-funktionalisierte Urethanverbindungen, die jeweils nur negativ entwickelbar sind, werden in den DE-A-29 17 483, DE-A-31 07 585 und WO 86/06730 beschrieben.

Die aufgeführten Beispiele zeigen, daß für die meisten Anwendungszwecke noch immer ein Bedarf an neuen positiv arbeitenden lichtempfindlichen Gemischen besteht, die hohe Lichtempfindlichkeit und einfache Handhabung, d. h. insbesondere keine zusätzlichen Verfahrensschritte, miteinander kombinieren. Aufgabe der vorliegenden Erfindung war es, ein positiv arbeitendes lichtempfindliches Gemisch mit den genannten Eigenschaften zu entwickeln sowie das ihm zugrundeliegende

Umsetzungsprodukt aufzuzeigen.

Überraschenderweise wurde gefunden, daß die Löslichkeit bestimmter ethylenisch ungesättigter Carboxylgruppen sowie Harnstoff- und Urethangruppen enthaltender Umsetzungsprodukte bei Belichtung in Gegenwart von Verbindungen, aus denen bei Belichtung Radikale entstehen, zunimmt.

Gegenstand der vorliegenden Erfindung ist ein Harnstoff- und Urethangruppen sowie Carboxylgruppen enthaltendes, ethylenisch ungesättigtes Umsetzungsprodukt, das dadurch gekennzeichnet ist, daß es durch Umsetzung von

i) mindestens einem ein- oder mehrfach ethylenisch ungesättigten Mono- oder Polyalkohol

mit

ii) mindestens einem Di- oder Polyisocyanat,

iii) mindestens einer Aminoverbindung der allgemeinen Formel

$R'HN\text{-}R\text{-}XH$,

wobei

R den zweiwertigen Rest eines, gegebenenfalls substituierten, Alkans, Arens, Ethers, Polyethers, Amins, Polyamins, Esters, Polyesters, Amids oder Polyamids,

$R'$ Wasserstoff, Alkyl, Aryl, Aralkyl, Hydroxyalkyl, Aminoalkyl, Mercaptoalkyl, Derivate derselben oder den einwertigen Rest

$H[O\text{-}(CH_2)_n\text{-}CHR'']_m$

mit n = 1 bis 3, m = 1 bis 10 oder Isomeren desselben und $R''$ = H oder $C_1$- bis $C_4$-Alkyl,

X O, S oder $NR'''$,

$R'''$ Wasserstoff, Alkyl, Aryl, Aralkyl, Hydroxyalkyl, Aminoalkyl, Mercaptoalkyl oder Derivate derselben

bedeuten, und/oder

mindestens einer Aminoverbindung der allgemeinen Formel

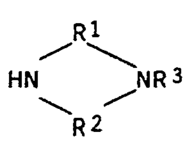 ,

wobei

$R^1$ und $R^2$ untereinander gleich oder verschieden sind und den zweiwertigen Rest eines, gegebenenfalls substituierten, Alkans, Arens, Ethers, Polyethers, Amins, Polyamins, Esters, Polyesters, Amids oder Polyamids bedeuten,

$R^3$ Wasserstoff, Alkyl, Aryl, Aralkyl, Hydroxyalkyl, Aminoalkyl, Mercaptoalkyl oder Derivate derselben bedeutet,

und

iv) mindestens einem Säureanhydrid einer mindestens zweiwertigen Carbonsäure, wobei die Summe der NCO- und Anhydridgruppen in ii) und iv) kleiner oder gleich der Zahl der damit reaktiven Gruppen in i) und iii) ist, erhalten worden ist.

Dieses olefinisch ungesättigte, Carboxylgruppen sowie Urethan- und Harnstoffgruppen enthaltende Umsetzungsprodukt eignet sich als Rohstoff für strahlungsempfindliche Materialien. Speziell eignet es sich zur Herstellung von Filmen, deren Löslichkeit in wäßrigen Lösungen nach Belichtung zunimmt.

Besondere Ausführungsformen der Erfindung bestehen darin, daß man zur Herstellung des erfindungsgemäßen Umsetzungsproduktes als Komponente i) einen einfach ethylenisch ungesättigten Mono- oder Polyalkohol, einen ein- oder mehrfach ethylenisch ungesättigten Monoalkohol, einen einfach ethylenisch ungesättigten Monoalkohol, eine eine Hydroxygruppe enthaltende, $\alpha,\beta$-ethylenisch ungesättigte Carbonylverbindung, ein Monohydroxyalkylacrylat oder -methacrylat, als Komponente ii) ein Diisocyanat, als Komponente iii) ein oder mehrere Hydroxyalkylamine sowie als Komponente iv) ein zyklisches Carbonsäureanhydrid einsetzt.

Gegenstand der vorliegenden Erfindung sind auch drei Verfahrensvarianten zur Herstellung der erfindungsgemäßen Umsetzungsprodukte, wobei entweder in einer ersten Stufe ein oder mehrere Di- oder Polyisocyanate ii) mit einem oder mehreren ethylenisch ungesättigten Mono- oder Polyalkoholen i) und gleichzeitig mindestens einer Aminoverbindung iii) zu einer mit Anhydridgruppen reaktionsfähigen Urethan-Harnstoffverbindung umgesetzt werden, die in einer zweiten Stufe mit mindestens einem Säureanhydrid iv) zu einer sauer funktionalisierten urethan-Harnstoffverbindung umgesetzt wird; oder in einer ersten Stufe eine oder mehrere Di- oder Polyisocyanate ii) mit einem oder mehreren ethylenisch ungesättigten Mono- oder Polyalkoholen i) zu einer mit Isocyanatgruppen substituierten Urethanverbindung umgesetzt werden, das Umsetzungsprodukt in einer zweiten Stufe mit mindestens einer Aminoverbindung iii) zu einer mit Anhydridgruppen reaktionsfähigen Urethan-Harnstoffverbindung umgesetzt wird, die in einer dritten Stufe mit mindestens einem Säureanhydrid iv) zu einer sauer funktionalisierten Urethan-Harnstoffverbindung umgesetzt wird; oder in einer ersten Stufe eine oder mehrere Di- oder Polyisocyanate ii) mit mindestens einer Aminoverbindung iii) zu einer mit Isocyanatgruppen substituierten Harnstoffverbindung umgesetzt werden, das Umsetzungsprodukt in einer zweiten Stufe mit einer oder mehreren ethylenisch ungesättigten Mono- oder Polyalkoholen i) zu einer mit Anhydridgruppen reaktionsfähigen Urethan-Harnstoffverbindung umgesetzt wird, die in einer dritten Stufe mit mindestens

einem Säureanhydrid iv) zu einer sauer funktionalisierten Urethan-Harnstoffverbindung umgesetzt wird.

Gegenstand der vorliegenden Erfindung sind außerdem strahlungsempfindliche Materialien aus (a) einem erfindungsgemäßen Harnstoff- und Urethangruppen sowie Carboxylgruppen enthaltenden ethylenisch ungesättigten Umsetzungsprodukt, (b) gegebenenfalls einem Photoinitiator oder Photoinitiatorsystem und gegebenenfalls
(c) weiteren Zusatz- und Hilfsstoffen.

In diesen strahlungsempfindlichen Materialien werden als Photoinitiatorsystem (b) vorzugsweise Benzophenon oder seine Derivate, Hexaarylbisimidazol-Derivate, N-Alkoxypyridiniumsalze oder Gemische dieser Verbindungen verwendet.

Das erfindungsgemäße Umsetzungsprodukt (a) wird also durch Umsetzung der Isocyanat-Komponente (ii) mit der ungesättigten Alkohol-Komponente (i) und gleichzeitig oder stufenweise mit der Amin-Komponente (iii) zu einer ungesättigten Urethan-Harnstoffverbindung hergestellt, wobei die gegenüber Isocyanat reaktiven Gruppen im Überschuß, bevorzugt in Verhältnissen zwischen 1,5 : 1 und 4 : 1 eingesetzt werden.

Diese Reaktion kann lösungsmittelfrei oder auch in inerten Lösungsmitteln z. B. Aceton, Tetrahydrofuran, Dioxan, Dichlormethan, Toluol, Methylethylketon, Essigester, durchgeführt werden. Ebenfalls als Lösungsmittel geeignet sind ein- oder mehrfach ethylenisch ungesättigte Verbindungen, sofern diese flüssig sind.

Die Reaktionstemperatur für die Umsetzung der Isocyanatgruppen liegt im allgemeinen zwischen 0 und 100 °C, vorzugsweise zwischen 20 und 70 °C.

Zur Beschleunigung der Umsetzung können Katalysatoren wie sie z. B. in Houben Weyl, Methoden der organischen Chemie, Bd. XIV/2, S. 60f, Georg Thieme-Verlag, Stuttgart (1963) bzw. Ullmann, Encyclopädie der technischen Chemie, Bd. 19, S. 306 (1981) beschrieben sind, eingesetzt werden. Bevorzugt sind zinnhaltige Verbindungen wie Dibutylzinndilaurat, Zinn(II)octoat oder Dibutylzinndimethoxid.

Im allgemeinen wird der Katalysator in einer Menge von 0,001 bis 2,5 Gew.% bevorzugt von 0,005 bis 1,5 Gew.%, bezogen auf die Gesamtmenge der Reaktanden eingesetzt.

Zur Stabilisierung werden im allgemeinen 0,001 bis 2 Gew.%, vorzugsweise 0,005 bis 1,0 % Polymerisationsinhibitoren zugesetzt. Dabei handelt es sich um die üblichen, zur Verhinderung einer thermischen Polymerisation verwendeten Verbindungen, z. B. vom Typ des Hydrochinons, der Hydrochinonmonoalkylether, des 2,6-Di-t-butylphenols, der N-Nitrosoamine, der Phenothiazine oder Phosphorigsäureester.

Die so erhaltenen Produkte werden anschließend mit mindestens einer Anhydridverbindung iv) zu einer Carbonsäure-Verbindung umgesetzt. Dabei können die gegenüber Anhydrid reaktiven Gruppen in äquivalenter Menge oder im Überschuß eingesetzt werden. Bevorzugt werden Äquivalentverhältnisse zwischen 1 : 1 und 4 : 1. Zur Beschleunigung der Reaktion können Katalysatoren vom Lewis-Säure- bzw. Lewis-Base-Typ in Mengen von 0,01 bis 2 Gew.% zugesetzt werden. Bevorzugt sind 4(N,N-Dimethylamino)pyridin und N-Methylimidazol. Die Reaktion kann zwischen 20 und 120 °C durchgeführt werden. Gegebenenfalls können Lösungsmittel zugesetzt werden.

Insbesondere für den Fall der lösungsmittelfreien Reaktionsführung kann das bei Raumtemperatur hochviskose bzw. feste Produkt vor dem Abkühlen verdünnt werden. Neben den bisher erwähnten Lösungsmitteln sind nach der Reaktion auch alkoholische Verdünner wie Methanol, Ethanol, Isopropanol, etc. geeignet.

Bezüglich der Aufbaukomponenten für die Herstellung der erfindungsgemäßen Umsetzungsprodukte (a) und für ihren Einsatz in strahlungsempfindlichen Gemischen ist im einzelnen folgendes auszuführen.

Für die Umsetzung der Komponenten i) bis iv) kommen in Frage als ein- oder mehrfach ethylenisch ungesättigte Mono- oder Polyalkohole (i) vorzugsweise Hydroxygruppen enthaltende alpha, beta-ungesättigte Carbonylverbindungen, Allylalkohole, hydroxyfunktionalisierte Allylether und -ester und Hydroxyalkyl-Vinylether; besonders bevorzugt sind Hydroxyalkylacrylate und -methacrylate mit 2 bis 4 Kohlenstoffatomen in der Alkylgruppe, wobei die Alkylgruppen linear oder verzweigt sein können und ggf. noch weitere Substituenten tragen können, wie z. B. Hydroxyethylacrylat, Hydroxyethylmethacrylat, Hydroxypropylacrylat, Hydroxypropylmethacrylat, Butandiolmonoacrylat und Butandiolmonomethacrylat.

Als Isocyanatkomponente ii) sind alle Verbindungen geeignet, die mindestens zwei zur Reaktion mit Alkoholen oder primären bzw. sekundären Aminen befähigte Isocyanatgruppen enthalten. Besonders bevorzugt werden Diisocyanato-diphenylmethan, Diisocyanatotoluol (= Toluylendiisocyanat), Hexamethylendiisocyanat und Isophorondiisocyanat, sowie deren oligomere vom Isocyanurat- und Biuret-Typ.

Als Aminoverbindungen iii) kommen solche der allgemeinen Formeln

$R'$ HN-R-XH

und/oder

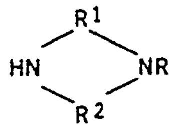
,

in Frage, wobei in der allgemeinen Formel
R′ HN-R-XH
R für den zweiwertigen Rest eines, gegebenenfalls substituierten, Alkans, beispielsweise mit 2 bis 10 Kohlenstoffatomen, wie $(CH_2)p$-mit p = 2 bis 10, $-CH_2-C(CH_3)_2-CH_2-$ oder $-CH(CH_3)-CH_2-$, eines Arens, beispielsweise Phenylen, eines substituierten Arens, beispielsweise $-(CH_2)_r-C_6H_3(OH)-$ mit r = 1 bis 6, vorzugsweise 2, eines Ethers, beispielsweise $-(CH_2-CHR^{IV}-O)q-CH_2-CHR^{IV}$ mit q = 1 bis 5, und $R^{IV}$ = H oder Alkyl mit 1 bis 4 Kohlenstoffatomen, eines Amins, beispielsweise mit 2 bis 20 Kohlenstoffatomen, wie z. B. $-(CH_2)_3-N(CH_3)-(CH_2)_3-$, eines Polyamins, beispielsweise $-(CH_2-CH_2-NH)_o-$ mit o = 2 bis 5, eines Esters, beispielsweise mit 4 bis 20 Kohlenstoffatomen, wie z. B. $-(CH_2)_2-COO-(CH_2)_s-$ mit s = 2 bis 6, $-CH_2-COO-CH_2-CH-(CH_3)-$, oder eines Amids, beispielsweise mit 4 bis 20 Kohlenstoffatomen, wie z. B. $-(CH_2)_2-CONH-CH_2-$ oder $-(CH_2)_2-CONH-(CH_2)_5-NHOC-(CH_2)_2-$, ;
R′ für Wasserstoff, Alkyl, beispielsweise mit 1 bis 30, vorzugsweise 1 bis 10 Kohlenstoffatomen, wie z. B. Methyl, Ethyl, Propyl, Butyl sowie Isomere davon, Cyclohexyl, Aryl, beispielsweise mit 6 bis 18 Kohlenstoffatomen, vorzugsweise Phenyl,
Aralkyl, beispielsweise mit 7 bis 20 Kohlenstoffatomen, z. B. Benzyl, 1-Methyl-3-phenylpropyl, 1-Phenylethyl,
Hydroxyalkyl, beispielsweise mit 2 bis 10 Kohlenstoffatomen, wie z. B. Hydroxyethyl, Hydroxypropyl, Hydroxybutyl,
Aminoalkyl, beispielsweise mit 2 bis 10 Kohlenstoffatomen, wie z. B. Aminoethyl, Aminopropyl, Dimethylaminobutyl, Dimethylaminoneopentyl, Mercaptoalkyl, beispielsweise mit 2 bis 10 Kohlenstoffatomen, wie z. B. Mercaptoethyl,
oder Derivate dieser Gruppen - wobei unter Derivaten im vorliegenden Falle mit Alkyl-, Halogen-, Nitro-, Nitril-, Carboxyl-, Ester-, Acyl-, OH-, Amino-, Sulfonsäure- oder Diazogruppen substituierte Gruppen der vorgenannten Art verstanden werden - oder den einwertigen Rest $H\{O-(CH_2)_n-CHR''\}_m$ mit n = 1 bis 3, m = 1 bis 10 oder Isomere dieses Rests und R″ = H oder $C_1$- bis $C_4$-Alkyl, wie er durch einfache Addition bzw. Polyaddition von cyclischen Ethern, z. B. Ethylenoxid, Propylenoxid oder Tetrahydrofuran erhältlich ist, z. B. Hydroxyethyloxyethyl;
X für O, S oder NR‴, worin R‴ für Wasserstoff, Alkyl, beispielsweise mit 1 bis 10 Kohlenstoffatomen, wie z. B. Methyl oder Ethyl, Aryl, beispielsweise Phenyl oder Naphthyl, Aralkyl, beispielsweise Benzyl oder Phenylethyl, Hydroxyalkyl, Aminoalkyl, oder Mercaptoalkyl wobei deren Alkylgruppen jeweils 1 bis 10 Kohlenstoffatome enthalten können, oder Derivate dieser Gruppen der unter R′ genannten Art steht.

Beispiele für Verbindungen der allgemeinen Formel R′ HN-R-XH sind Ethylendiamin, Butandiamin, Neopentandiamin, Polyoxypropylendiamine, Polyoxyethylendiamine, N-Ethylethylendiamin, Diethylentriamin, Monoisopropanolamin. Besonders bevorzugt werden Ethanolamin, Diethanolamin, Diisopropanolamin, Neopentanolamin, Ethylisopropanolamin, Butylethanolamin und 2-Mercaptoethylamin.

In der allgemeinen Formel

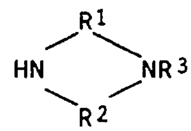
,

können $R^1$ und $R^2$ untereinander gleich oder verschieden sein und insbesondere den zweiwertigen Rest eines, gegebenenfalls substituierten, Alkans, beispielsweise mit 2 bis 4 Kohlenstoffatomen, z. B. $-(CH_2)_t-$ mit t = 1 bis 4, Arens, beispielsweise o-Phenylen, Ethers, beispielsweise mit 2 bis 4 Kohlenstoffatomen, z. B. $-CH_2-O-CH_2-$bedeuten;
$R^3$ kann für Wasserstoff, Alkyl, Aryl, Aralkyl, Hydroxyalkyl, Aminoalkyl, Mercaptoalkyl oder deren Derivate der unter R′ genannten Art stehen. Bevorzugte Verbindungen der allgemeinen Formel

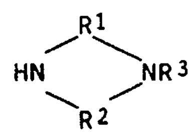
,

sind Piperazin und 1-(2-Hydroxyethyl)piperazin. Desgleichen eignen sich auch Gemische der unter iii) genannten Aminoverbindungen.

Als Säureanhydride iv) kommen die Anhydride aller Verbindungen in Frage, die mindestens zwei Carbonsäure-Gruppen enthalten. Besonders bevorzugt werden zyklische Carbonsäureanhydride wie z. B. phthalsäureanhydrid, Maleinsäureanhydrid, Trimellitsäureanhydrid, Pyromellitsäureanhydrid und das Anhydrid der Benzophenontetracarbonsäure.

Die für die Herstellung des erfindungsgemäßen Umsetzungsproduktes verwendeten Verbindungen i) bis iv) werden so aufeinander abgestimmt, daß die daraus hergestellten erfindungsgemäßen Materialien in Wasser oder alkalischer wäßriger Lösung unlöslich sind. Die erfindungsgemäßen Umsetzungsprodukte können Säurezahlen bis 300, vorzugsweise 10 bis 200 mg KOH/g aufweisen. Das Molekulargewicht wird so gewählt, daß gute Filmbildungseigenschaften erhalten werden.

(b) Als gegebenenfalls zu verwendende Photoinitiatoren für das erfindungsgemäße strahlungsempfindliche Material kommen die für lichtempfindliche, photopolymerisierbare Aufzeichnungsmaterialien üblichen und an sich bekannten Photoinitiatoren bzw. Photoinitiatorsysteme in Betracht. Beispielhaft seien hierfür genannt: Benzoin, Benzoinether, insbesondere Benzoinalkylether, substituierte Benzoine, Alkylether von substituierten Benzoinen, wie z. B. 0-Methylbenzoinalkylether oder $\alpha$-Hydroxymethylbenzoinalkylether; Benzile, Benzilketale, insbesondere Benzildimethylketal, Benzilmethylethylketal oder Benzilmethylbenzylketal; die als Photoinitiator bekannten und wirksamen Acylphosphinoxid-Verbindungen, wie z. B. 2, 4, 6-Trimethylbenzoyldiarylphosphinoxid; Benzophenon, Derivate des Benzophenons, 4,4′-Dimethylaminobenzophenon, Derivate von Michler's Keton; Anthrachinon und substituierte Anthrachinone; arylsubstituierte Imidazole oder deren Derivate, wie z. B. 2, 4, 5-Triarylimidazoldimere; Thioxanthonderivate, die als Photoinitiatoren wirksamen Acridin- oder Phenacin-Derivate und N-Alkoxypyridiniumsalze und deren Derivate. Geeignete Photoinitiatoren sind auch Diazoniumsalze, wie z. B. p-Phenylaminobenzoldiazonium-hexafluorophosphat, Iodoniumsalze, wie z. B. Diphenyliodonium-tetrafluoroborat, oder Sulfoniumsalze, wie z. B. Triphenylsulfonium-hexafluoroarsenat. Beispiele für Initiatorsysteme sind Kombinationen der genannten Initiatoren mit Sensibilisierungshilfsmitteln oder Aktivatoren, wie insbesondere tertiären Aminen. Typische Beispiele für solche Initiatorsysteme sind Kombinationen aus Benzophenon oder Benzophenon-Derivaten mit tertiären Aminen, wie Triethanolamin oder Michler's Keton; oder Gemische aus 2,4,5-Triarylimidazol-Dimeren und Michler's Keton oder den Leukobasen von Triphenylmethanfarbstoffen. Die Auswahl der geeigneten Photoinitiatoren bzw. Photoinitiator-Systeme ist dem Fachmann geläufig. Besonders bevorzugte Photoinitiatoren sind Michlers Keton, Benzophenon, Hexaarylbisimidazol-Derivate und N-Alkoxypyridinium-Salze Auch Mischungen der genannten Photoinitiatoren eignen sich sehr gut. Die Photoinitiatoren bzw. Photoinitiatorsysteme sind in der lichtempfindlichen Aufzeichnungsschicht im allgemeinen in Mengen von 0,1 bis 10 Gew.% bezogen auf das strahlungsempfindliche Material, enthalten.

Besonders bevorzugte Photoinitiatoren sind Michlers Keton, Benzophenon, Hexaarylbisimidazol-Derivate und N-Alkoxypyridinium-Salze. Auch Mischungen der genannten Photoinitiatoren eignen sich sehr gut.

(c) Als weitere zusatz- und/oder Hilfsstoffe (c), die in dem erfindungsgemäßen strahlungsempfindlichen Material enthalten sein können, kommen z. B. Farbstoffe und/oder Pigmente, photochrome Verbindungen bzw. Systeme, sensitometrische Regler, Weichmacher, Verlaufshilfsmittel, Mattierungs- oder Gleitmittel, basische Komponenten und dergleichen in Betracht. Beispiele für Farbstoffe und/oder Pigmente, die sowohl als Kontrastmittel als auch schichtverfestigend wirken können, sind u.a. Brilliant Green Dye (C.I. 42 040), Viktoria-Reinblau FGA, Viktoria-Reinblau 80 (C.I. 42 595), Viktoria-Blau B (C.I. 44 045), Rhodamin 6 G (C.I. 45 160), Triphenylmethanfarbstoffe, Naphthalimidfarbstoffe und 3′-Phenyl-7-dimethylamino-2,2′-spiro-di-(2H-1-benzopyran). Photochrome oder FarbumschlagSysteme, die bei Belichtung mit aktinischem Licht reversibel oder irreversibel ihre Farbe ändern, ohne hierbei den Photopolymerisationsprozeß zu stören, sind z. B. Leukofarbstoffe zusammen mit geeigneten Aktivatoren. Als Beispiele für Leukofarbstoffe seien die Leukobasen der Triphenylmethanfarbstoffe, wie Kristallviolett-Leukobase und MalachitgrünLeukobase, Leuko-Basischblau, Leuko-Pararosanilin, Leuko-Patentblau A oder V genannt; ferner kommt auch Rhodamin B-Base in Betracht. Als Aktivatoren für diese photochromen Verbindungen kommen u.a. organische Halogenverbindungen, die bei Belichtung mit aktinischem Licht Halogenradikale abspalten, oder Hexaarylbisimidazole in Betracht. Geeignete Farbumschlagsysteme sind auch in DE-A-38 24 551 beschrieben. Besonders geeignete Farbumschlagsysteme sind solche, bei denen die Farbintensität bei Belichtung geringer wird, wie z. B. Sudanfarbstoffe, Polymethinfarbstoffe oder Azofarbstoffe in Kombination mit geeigneten Photoinitiatoren. Zu den sensitometrischen Reglern gehören Verbindungen wie z. B. 9-Nitroanthracen, 10,10′-Bisanthron, Phenazinium-, Phenoxazinium-, Acridinium- oder Phenothiazinium-Farbstoffe, insbesondere in Kombination mit milden Reduktionsmitteln, 1,3-Dinitrobenzole und ähnliche. Als Weichmacher können die an sich bekannten und üblichen niedermolekularen oder hochmolekularen Ester, wie Phthalate oder Adipate, Toluolsulfonamid oder Tricresylphosphat, dienen. Als basische Komponenten kommen zusätze von Aminen, insbesondere tertiären Aminen, z. B. Triethylamin oder Triethanolamin, oder Alkali- und Erdalkalihydroxide und -carbonate in Betracht. Die zusatz- und/oder Hilfsstoffe sind im strahlungsempfindlichen Material in den für diese Stoffe üblichen und bekannten wirksamen Mengen vorhanden. Ihre Menge sollte jedoch im allgemeinen 30 Gew.%, vorzugsweise 20 Gew.% bezogen auf das strahlungsempfindliche Material, nicht überschreiten.

In vielen Fällen hat es sich als zweckmäßig

erwiesen, den erfindungsgemäßen strahlungsempfindlichen Materialien saure Polymere zuzusetzen, wie z. B. teilveresterte Styrol-Maleinsäureanhydrid-Copolymere, Copolymere aus Styrol, Methylmethacrylat, Ethylacrylat und Methacrylsäure oder Copolymere aus Methylmethacrylat, Ethylhexylacrylat und Acrylsäure oder Methacrylsäure. Solche sauren Polymere werden dem strahlungsempfindlichen Material bevorzugt in einer Konzentration von 1 - 40 Gew.% besonders bevorzugt in einer Konzentration von 5 - 30 Gew.% bezogen auf das Gesamtgewicht des strahlungsempfindlichen Materials, zugesetzt.

Die erfindungsgemäßen strahlungsempfindlichen Materialien können zusätzlich eine oder mehrere ein- oder mehrfach ethylenisch ungesättigte Verbindungen enthalten. Für diesen Zweck besonders geeignete ethylenisch ungesättigte Verbindungen sind Acrylate und Methacrylate, wie z. B. Trimethylolpropantriacrylat oder Tripropylenglykoldiacrylat. Die ethylenisch ungesättigten Verbindungen werden dem strahlungsempfindlichen Material bevorzugt in einer Konzentration von 1 - 20 Gew.% besonders bevorzugt in einer Konzentration von 3 - 10 Gew.%, bezogen auf das Gesamtgewicht des strahlungsempfindlichen Materials, zugesetzt. Einen Zusatz von ethylenisch ungesättigten Verbindungen wird man insbesondere dann wählen, wenn man nach einem ersten Belichtungsschritt und der Entfernung des belichteten Materials in einer Entwicklerlösung in einem zweiten, längeren Belichtungsschritt eine Vernetzung herbeiführen will, um so die mechanische Stabilität, z. B. bei Druckplatten, zu verbessern.

Eine Folie oder Beschichtung kann hergestellt werden, indem die oben beschriebenen Verbindungen in einem Lösemittel gelöst werden, und die erhaltene Lösung dann durch Gießen, ggf. mit Hilfe eines Rakels, Aufschleudern, Roller-Coating oder andere Auftragsverfahren auf einen permanenten oder temporären Träger aufgebracht wird.

Geeignete Lösemittel sind z. B aromatische Kohlenwasserstoffe, niedermolekulare Ketone, Alkohole, Ether, Ester und Chlorkohlenwasserstoffe.

Als Träger für die erfindungsgemäßen strahlungsempfindlichen Beschichtungen kann praktisch jedes auf dem Drucksektor und bei der Herstellung von Leiterplatten für die Elektronikindustrie gebräuchliche Material eingesetzt werden. Eine wichtige Bedingung ist jedoch, daß der Träger inert ist, d.h. nicht mit dem zur Herstellung der Beschichtung verwendeten strahlungsempfindlichen Material reagiert.

. Solche Trägermaterialien sind z. B. Stahl, Aluminiumlegierungen, mechanisch, chemisch oder elektrochemisch aufgerauhtes Aluminium, Silicium, Polyester und andere Kunststoffe. Die Schichtdicke kann dabei in weiten Grenzen variieren. Sie wird z. B. bei der Verwendung des strahlungsempfindlichen Materials als Hochdruck- oder Tiefdruckplatte typischerweise zwischen 50 und 500 µm, bei der Verwendung als Photoresist für die Herstellung gedruckter Schaltungen zwischen 20 und 100 µm und bei der Verwendung als Photoresist zur Strukturierung von Halbleitermaterialien zwischen 0,3 und 5 µm betragen. Wird das erfindungsgemäße strahlungsempfindliche Material als Offsetdruckplatte verwendet, wird man die Beschichtung so vornehmen, daß Trockenschichtgewichte von 0,5 - 5 g/qm erhalten werden.

Die erfindungsgemäßen strahlungsempfindlichen Materialien eignen sich in vorteilhafter Weise für die Herstellung von Druckformen oder Resistmustern nach den hierfür an sich bekannten und üblichen Verfahren. Hierzu wird die lichtempfindliche Aufzeichnungsschicht - bei Photoresistfilmen und Schichtübertragungsmaterialien nach der Schichtübertragung auf das zu schützende Substrat - bildmäßig mit aktinischem Licht belichtet, wobei sich hierfür die üblichen Lichtquellen von aktinischem Licht, wie beispielsweise UV-Fluoreszenzröhren, Quecksilberhoch-, -mittel- oder -niederdruckstrahler, superaktinische Leuchtstoffröhren, Xenon-Impulslampen, aber auch UV-Laser, Argonlaser und ähnliche, eignen. Die von den Lichtquellen emittierte Wellenlänge soll im allgemeinen zwischen 230 und 450 nm, bevorzugt zwischen 300 und 420 nm, liegen und insbesondere auf die Eigenabsorption des in der photopolymerisierbaren Aufzeichnungsschicht enthaltenen Photoinitiators abgestimmt sein.

Nach der bildmäßigen Belichtung wird die Druckform bzw. das Resistmuster durch Auswaschen der belichteten Bereiche der Aufzeichnungsschicht mit Wasser oder vorzugsweise einer wäßrig-alkalischen Entwicklerlösung entwickelt. Das Entwickeln kann durch Waschen, Sprühen, Reiben, Bürsten etc. erfolgen. Die erfindungsgemäßen Aufzeichnungselemente zeigen dabei einen großen Entwicklungsspielraum und eine sehr geringe Überwaschempfindlichkeit. Als Entwicklerlösungen kommen wäßrig-alkalische Lösungen in Betracht, die zur Einstellung des günstigsten pH-Wertes, im allgemeinen Im Bereich von 8 bis 14, vorzugsweise im Bereich von etwa 9 bis 13, alkalisch reagierende Substanzen, wie z. B. Borax, Dinatriumhydrogenphosphat, Soda, Alkalihydroxide oder organische Basen, wie Di- oder Triethanolamin in Wasser gelöst, enthalten. Die wäßrig-alkalischen Entwicklerlösungen können auch Puffersalze, z. B. wasserlösliche Alkaliphosphate, -silikate, -borate, -acetate oder -benzoate enthalten. Als weitere Bestandteile der Entwicklerlösungen können Netzmittel, vorzugsweise anionische Netzmittel, und gegebenenfalls wasserlösliche Polymere, wie z. B. Natriumcarboxymethylcellulose, Polyvinylalkohol, Polynatriumacrylat

und dergleichen, mitverwendet werden. obwohl die erfindungsgemäßen Aufzeichnungselemente im allgemeinen mit Wasser bzw. wäßrig-alkalischen Entwicklerlösungen ausgewaschen werden, ist es selbstverständlich grundsätzlich möglich, wenn auch nicht erforderlich, daß die Entwicklerlösungen auch noch geringe zusätze an wasserlöslichen organischen Lösungsmitteln, wie z. B. aliphatischen Alkoholen, Aceton oder Tetrahydrofuran, enthalten.

Die erfindungsgemäßen strahlungsempfindlichen Materialien können z. B. durch energiereiche Strahlung wie Elektronen- oder Röntgenstrahlung strukturiert werden, wobei sie sich durch eine sehr hohe Strahlungsempfindlichkeit auszeichnen. Bei dieser Verwendung kann man im allgemeinen auf den zusatz eines eigenen Initiatorsystems verzichten. Will man die erfindungsgemäßen Materialien hingegen durch sichtbares oder UV-Licht strukturieren, wie es bei der Herstellung von Druckplatten und Photoresisten üblich ist, wird man geeignete Photoinitiatoren zusetzen, deren spektrale Empfindlichkeit auf die Emission der verwendeten Lichtquelle abgestimmt ist. Auch diese Gemische zeichnen sich durch eine für positiv arbeitende Systeme sehr hohe Lichtempfindlichkeit aus, die der Lichtempfindlichkeit handelsüblicher Negativsysteme vergleichbarer Schichtdicke entspricht. Diese hohe Lichtempfindlichkeit wird erreicht, ohne daß zusätzliche Verfahrensschritte z. B. die bei vielen anderen Positivsystemen notwendige thermische Nachbehandlung erforderlich wären. Auch die eingesetzten Entwicklerlösungen entsprechen den bei negativ arbeitenden Schichten eingesetzten, so daß vollkommene Kompatibilität der erfindungsgemäßen Aufzeichnungsschichten mit herkömmlichen Systemen besteht. Die erfindungsgemäßen strahlungsempfindlichen Aufzeichnungsschichten eignen sich gut für Mehrfachbelichtungen. Dadurch können bei vielen Anwendungen Verfahrensschritte eingespart werden. Mehrfachbelichtungen sind bei allen photopolymerisierbaren Systemen, aber auch bei vielen Positivsystemen aus prinzipiellen Gründen nicht möglich. Die erfindungsgemäßen strahlungsempfindlichen Materialien weisen weiter die interessante Eigenschaft auf, daß sie zwar bei kurzen Bestrahlungszeiten als Positivsysteme arbeiten, bei längeren Bestrahlungszeiten jedoch als vernetzbare Systeme angesehen werden können. Dieser Effekt kann, wie beschrieben, durch zusatz ethylenisch ungesättigter, polymerisierbarer Verbindungen verstärkt werden. Diese Eigenschaft kann ausgenützt werden, um nach einem ersten, bildmäßigen Belichtungsschritt mit kurzer Belichtungszeit und nach Entfernung der belichteten Bereiche in einer Entwicklerlösung in einem zweiten, nicht notwendigerweise bildmäßigen Belichtungsschritt mit deutlich höherer Belichtungszeit eine Vernetzung auszulösen. Auf diese Weise können die mechanischen Eigenschaften, z. B. von Druckplatten, verbessert werden.

Die Erfindung wird durch die nachstehenden Beispiele näher erläutert.

Die in den Herstellvorschriften und Beispielen genannten Prozente sind, soweit nicht anders angegeben, Gewichtsprozente.

Herstellung der erfindungsgemäßen Umsetzungsprodukte

Herstellvorschrift 1

In eine Vorlage von 333 g Isophorondiisocyanat (1,5 Mol), 0,1 g Dibutylzinndilaurat, 0,8 g 2,6-Ditertiär-butyl-4-methylphenol und 218 g Methylethylketon werden unter Rühren innerhalb von 30 Minuten bei 20 bis 29 °C 174,2 g Hydroxyethylacrylat (1,5 mol) zugetropft. Nach 1,5 Stunden Reaktionszeit, in der die Temperatur bis auf 47 °C steigt, beträgt der NCO-Gehalt 8,71 %. Unter Eiskühlung bei 25 bis 28 °C werden eine Lösung von 179,8 g Diisopropanolamin (1,35 mol) in 77,1 g Methylethylketon innerhalb von 20 min zugetropft. Nach weiterem Rühren über ca.3 Stunden bei 50 °C werden 222,1 g Phthalsäureanhydrid (1,5 mol), 95,2 g Methylethylketon und 4,5 g N-Methylimidazol zugegeben und 5 Stunden bei 80 °C umgesetzt. Die 75 %ige Lösung des Produktes hat eine Viskosität von 6,48 mPa•s (23 °C, Kegelplatte-Viskosimeter). Das lösungsmittelfreie Produkt hat eine Säurezahl von 91,7 mg KOH/g.

Herstellvorschrift 2

Analog zu Herstellvorschrift 1 werden umgesetzt 250 g Diisocyanatodiphenylmethan (1 Mol), 0,1 g Dibutylzinndilaurat in 244 g Ethylacetat mit einer Lösung von 116,1 g Hydroxyethylacrylat (1 mol), 0,8 g 2,6-Di-tertiär-butyl-4-methylphenol und 2 g Tris(N-cyclohexyl-diazeniumdioxy)aluminium (30 %ig in Solvesso® 100/Shell), sowie 133,2 g Diisopropanolamin (1 mol) gelöst in 110 ml Ethylacetat. Nach der Reaktion mit 98,1 g Maleinsäureanhydrid (1 mol) und 2,5 g N-Methylimidazol wird eine 64,5 %ige Lösung mit einer Viskosität von 1,04 Pa•s (23 °C, Kegelplatte-Viskosimeter) erhalten. Das lösungsmittelfreie Produkt hat eine Säurezahl von 90,2 mg KOH/g.

Herstellvorschrift 3

Analog zu Herstellvorschrift 1 werden umgesetzt 261,2 g Toluylendiisocyanat (1,5 mol), 0,1 g

Dibutylzinndilaurat, 0,8 g 2,6-Di-tertiärbutyl-4-methylphenol und 3,1 g Tris(N-cyclohexyl-diazeniumdioxy)aluminium (30 %ig in Solvesso® 100 / Shell), in 187 g Methylethylketon mit 174,2 g Hydroxyethylacrylat (1,5 mol), sowie 199,8 g Diisopropanolamin (1,5 mol) gelöst in 86 ml Methylethylketon. Nach der Reaktion mit 222,1 g Phthalsäureanhydrid (1,5 mol) und 4,3 g N-Methylimidazol wird eine 74 %ige Lösung mit einer Viskosität von 4,96 Pa•s (23° C, Kegelplatte-Viskosimeter) erhalten. Das lösungsmittelfreie Produkt hat eine Säurezahl von 89,2 mg KOH/g.

Verwendung in strahlungsempfindlichen Materialien

Beispiel 1

10 g des nach Herstellvorschrift 1 hergestellten Umsetzungsprodukts, 700 mg N-Methoxypicolinium-tosylat und 15 mg Michler's Keton wurden in 8 g Methylethylketon gelöst und so auf eine 23 µm starke Polyethylenterephthalatfolie gegossen, daß die photoempfindliche Schicht nach dem Trocknen eine Stärke von 40 µm aufwies. Die Schicht wurde zur Aufbewahrung mit einer 30 µm starken PE-Folie abgedeckt. Zur Prüfung wurde die PE-Folie abgezogen, der Verbund aus Polyethylenterephthalatfolie und photoempfindlicher Schicht mit der photoempfindlichen Schicht zum Kupfer auf ein kupferkaschiertes Leiterplattensubstrat laminiert und auf einem Riston®-PC-Printer mit 50 mJ/cm$^2$ belichtet. Nach dem Abziehen der Polyethylenterephthalatfolie wurde in einem Sprühwascher 15 Sekunden mit 1 %iger Sodalösung von 30° C entwickelt, wobei sich die belichteten Teile der lichtempfindlichen Schicht vollkommen entfernen ließen. Die unbelichteten Teile blieben unverändert.

Beispiel 2

Wie in Beispiel 1 wurden 10 g des nach Herstellvorschrift 1 erhaltenen Produkts in 8 g Methylethylketon gelöst und mit 300 mg Benzophenon und mg Michler's Keton versetzt. Aus der Lösung wurden wie in Beispiel 1 Schichten von 40 µm Stärke gegossen. Die Schichten wurden auf kupferkaschierte Leiterplattensubstrate laminiert und in einem Riston-PC-Printer mit 100 mJ/cm$^2$ belichtet. Die belichteten Stellen ließen sich in 30 Sekunden mit 1 %iger-Sodalösung auswaschen, ohne daß auf dem Kupfer Rückstände zurückblieben.

Beispiel 3

Ebenso wurden 10 g der nach Herstellvorschrift 1 hergestellten Verbindung in 8 g Methylethylketon mit 200 mg 2,2′-Bis(o-chlorphenyl)-4,4′,5,5′-tetra(p-methoxyphenyl)bisimidazolyl versetzt. Die erhaltene Lösung wurde wie in Beispiel 1 weiterverarbeitet. Nach Belichtung in einem Riston-PC-Printer mit 100 mJ/cm$^2$ ließen sich die belichteten Stellen in 15 Sekunden mit 1 %iger Sodalösung entfernen.

Beispiel 4

10 g des nach Herstellvorschrift 2 erhaltenen Produkts wurden in 8 g Methylethylketon gelöst und mit 700 mg N-Methoxypicolinium-tosylat und 15 mg Michler's Keton versetzt. Die weitere Verarbeitung und Prüfung wurde wie in Beispiel 1 durchgeführt. Nach Belichtung mit 70 mJ/cm$^2$ betrug die erforderliche Entwicklungszeit in 1 %iger Sodalösung 25 Sekunden.

Beispiel 5

47 g der nach Herstellvorschrift 3 erhaltenen Verbindung wurden in 35 g Methylethylketon gelöst und mit 75 mg Michlers Keton, 1,5 g Benzophenon und 1,5 g N-Methoxypicoliniumtosylat versetzt. Die erhaltene Lösung wurde wie in Beispiel 1 weiterverarbeitet und geprüft Nach Belichtung mit 150 mJ/cm$^2$ ließen sich die belichteten Stellen in 30 Sekunden mit 1 %iger Sodalösung entfernen.

Beispiel 6

10 g des nach Herstellvorschrift 1 hergestellten Umsetzungsprodukts wurden in 8 g Methylethylketon gelöst und so auf ein kupferkaschiertes Leiterplattensubstrat gegossen, daß eine Schichtdicke der strahlungsempfindlichen Schicht von 30 µm entstand. Die Schicht wurde in einer Elektronenstrahl-Anlage der Firma Energy Science, Woburn, USA, Typ CB 150/15/10 mit 0,15 MRad bestrahlt und danach mit 1 %iger Natriumcarbonatlösung behandelt. Dabei löste sich die bestrahlte Schicht nach 25 Sekunden auf, während an einer nicht bestrahlten Vergleichsprobe auch nach 300 Sekunden Entwicklungszeit keine Veränderung auftrat.

Beispiel 7

10 g des nach Herstellvorschrift 1 erhaltenen Umsetzungsprodukts, 530 mg N-Methoxypicolinium-tosylat und 25 mg Michlers Keton wurden in einem Gemisch aus 45 g Propylenglykolmonomethylether und 45 g Aceton gelöst und so auf ein 30 µm starkes Aluminiumblech mit elektrochemisch aufgerauhter Oxidoberfläche gegossen, daß die photoempfindliche Schicht nach dem Trocknen ein Schichtgewicht von 2,1 g/m² aufwies. Bis zur Prüfung wurde die so hergestellte Platte mit Schutzpapier abgedeckt und unter Lichtausschluß gelagert. zur Herstellung einer Druckform wurde die Platte nach Entfernung des Schutzpapiers in einem handelsüblichen Offset-Belichter (5,5 kW) mit 50 Takten belichtet, danach 60 Sekunden mit 1,5 %iger Natriumcarbonatlösung entwickelt und anschließend mit Wasser gespült. Durch diese Behandlung wurden die belichteten Stellen der Schicht vollständig entfernt, während die unbelichteten unverändert blieben.

Beispiel 8

10 g des nach Herstellvorschrift 1 hergestellten Umsetzungsprodukts, 300 mg Dimethylaminobenzoesäureethylester und 80 mg Isopropylthioxanthon wurden in 8 g Methylethylketon gelöst und wie in Beispiel 1 zu einer Schicht von 40 µm Stärke vergossen. Diese Schicht wurde auf ein kupferkaschiertes Leiterplattensubstrat laminiert und durch eine Vorlage mit 50 mJ/cm² bildmäßig belichtet. Nach dem Abziehen der Polyethylenterephthalatfolie wurde die Schicht 30 Sekunden mit 1 %iger Sodalösung behandelt, wodurch die belichteten Teile der Schicht entfernt wurden. Die Schicht wurde dann 10 min bei 85 °C getrocknet und nach dem Abkühlen erneut bildmäßig mit 50 mJ/cm² belichtet, wobei eine andere Vorlage verwendet wurde. Die im zweiten Belichtungsschritt belichteten Bereiche wurden dann ebenfalls mit 1 %iger Sodalösung entfernt.

Beispiel 9

9 g des nach Herstellvorschrift 1 hergestellten Umsetzungsprodukts, 1 g Tripropylenglykoldiacrylat, 300 mg Dimethylaminobenzoesäureethylester und 80 mg Isopropylthioxanthon wurden in 8 g Methylethylketon gelöst und wie in Beispiel 1 zu einer Schicht von 40 µm Stärke vergossen. Diese Schicht wurde auf ein kupferkaschiertes Leiterplattensubstrat laminiert und durch eine Vorlage mit 50 mJ/cm² bildmäßig belichtet. Nach dem Abziehen der Polyethylenterephthalatfolie wurde die Schicht 30 Sekunden mit 1 %iger Sodalösung behandelt, wodurch die belichteten Teile der Schicht entfernt wurden. Die Schicht wurde dann 10 min bei 85 °C getrocknet und nach dem Abkühlen vollflächig mit 1000 mJ/cm² belichtet. Danach wies die Schicht eine wesentlich größere Härte und Elastizität auf als im unbelichteten Zustand. Es war ferner nicht mehr möglich, die Schicht mit 1 %iger Natriumcarbonatlösung zu entfernen.

**Ansprüche**

1. Harnstoff- und Urethangruppen sowie Carboxylgruppen enthaltendes ethylenisch ungesättigtes Umsetzungsprodukt, dadurch gekennzeichnet, daß es durch Umsetzung von

i) mindestens einem ein- oder mehrfach ethylenisch ungesättigten Mono- oder Polyalkohol mit

ii) mindestens einem Di- oder Polyisocyanat,

iii) mindestens einer Aminoverbindung der allgemeinen Formel

$R'HN-R-XH$,

wobei

R den zweiwertigen Rest eines, gegebenenfalls substituierten, Alkans, Arens, Ethers, Polyethers, Amins, Polyamins, Esters, Polyesters, Amids oder Polyamids,

R' Wasserstoff, Alkyl, Aryl, Aralkyl, Hydroxyalkyl, Aminoalkyl, Mercaptoalkyl, Derivate derselben oder den einwertigen Rest $H[O-(CH_2)_n-CHR'']_m$ mit n = 1 bis 3, m = 1 bis 10 oder Isomere desselben und

R'' = H oder $C_1$- bis $C_4$-Alkyl,

X O, S oder NR''',

R''' Wasserstoff, Alkyl, Aryl, Aralkyl, Hydroxyalkyl, Aminoalkyl, Mercaptoalkyl oder Derivate derselben bedeuten, und/oder

mindestens einer Aminoverbindung der allgemeinen Formel

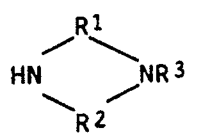 ,

wobei

$R^1$ und $R^2$ untereinander gleich oder verschieden sind und den zweiwertigen Rest eines, gegebenenfalls substituierten, Alkans, Arens, Ethers, Polyethers, Amins, Polyamins, Esters, Polyesters, Amids oder Polyamids bedeuten,

$R^3$ Wasserstoff, Alkyl, Aryl, Aralkyl, Hydroxyalkyl, Aminoalkyl, Mercaptoalkyl oder Derivate derselben bedeutet

und

iv) mindestens einem Säureanhydrid einer mindestens zweiwertigen Carbonsäure,

wobei die Summe der NCO- und Anhydridgruppen in ii) und iv) kleiner oder gleich der Zahl der damit reaktiven Gruppen in i) und iii) ist, erhalten worden ist.

2. Umsetzungsprodukt nach Anspruch 1, dadurch.gekennzeichnet, daß als Komponente i) ein einfach ethylenisch ungesättigter Mono- oder Polyalkohol eingesetzt wird.

3. Umsetzungsprodukt nach Anspruch 1, dadurch gekennzeichnet, daß als Komponente i) ein ein- oder mehrfach ethylenisch ungesättigter Monoalkohol eingesetzt wird.

4. Umsetzungsprodukt nach Anspruch 1, dadurch gekennzeichnet, daß als Komponente i) ein einfach ethylenisch ungesättigter Monoalkohol eingesetzt wird.

5. Umsetzungsprodukt nach Anspruch 1, dadurch gekennzeichnet, daß als Komponente i) eine eine Hydroxygruppe enthaltende, $\alpha,\beta$-ethylenisch ungesättigte Carbonylverbindung eingesetzt wird.

6. Umsetzungsprodukt nach Anspruch 1, dadurch gekennzeichnet, daß als Komponente i) ein Monohydroxyalkylacrylat oder -methacrylat eingesetzt wird.

7. Umsetzungsprodukt nach einem der vorhergehenden Ansprüche, dadurch gekennzeichnet, daß als Komponente ii) ein Diisocyanat eingesetzt wird.

8. Umsetzungsprodukt nach einem der vorhergehenden Ansprüche, dadurch gekennzeichnet, daß als Komponente iii) ein oder mehrere Hydroxyalkylamine eingesetzt werden.

9. Umsetzungsprodukt nach einem der vorhergehenden Ansprüche, dadurch gekennzeichnet, daß als Komponente iv) ein zyklisches Carbonsäureanhydrid eingesetzt wird.

10. Verfahren zur Herstellung eines Umsetzungsprodukts nach Anspruch 1, dadurch gekennzeichnet, daß in einer ersten Stufe ein oder mehrere DI- oder Polylsocyanate ii) mit einem oder mehreren ethylenisch ungesättigten Mono- oder Polyalkoholen i) und gleichzeitig mindestens einer Aminoverbindung iii) zu einer mit Anhydridgruppen reaktionsfähigen Urethan-Harnstoffverbindung umgesetzt werden, die in einer zweiten Stufe mit mindestens einem Säureanhydrid iv) zu einer sauer funktionalisierten Urethan-Harnstoffverbindung umgesetzt wird.

11. Verfahren zur Herstellung eines Umsetzungsprodukts nach Anspruch 1, dadurch gekennzeichnet, daß in einer ersten Stufe eine oder mehrere Di- oder Polyisocyanate ii) mit einem oder mehreren ethylenisch ungesättigten Mono- oder Polyalkoholen i) zu einer mit Isocyanatgruppen substituierten Urethanverbindung umgesetzt werden, das Umsetzungsprodukt in einer zweiten Stufe mit mindestens einer Aminoverbindung iii) zu einer mit Anhydridgruppen reaktionsfähigen Urethan-Harnstoffverbindung umgesetzt wird, die in einer dritten Stufe mit mindestens einem Säureanhydrid iv) zu einer sauer funktionalisierten Urethan-Harnstoffverbindung umgesetzt wird.

12. Verfahren zur Herstellung eines Umsetzungsproduktes nach Anspruch 1, dadurch gekennzeichnet, daß in einer ersten Stufe eine oder mehrere Di- oder Polylsocyanate ii) mit mindestens einer Aminoverbindung iii) zu einer mit Isocyanatgruppen substituierten Harnstoffverbindung umgesetzt werden, das Umsetzungsprodukt in einer zweiten Stufe mit einer oder mehreren ethylenisch ungesättigten Mono- oder Polyalkoholen i) zu einer mit Anhydridgruppen reaktionsfähigen Urethan-Harnstoff-Verbindung umgesetzt wird, die in einer dritten Stufe mit mindestens einem Säureanhydrid iv) zu einer sauer funktionalisierten Urethan-Harnstoffverbindung umgesetzt wird.

13. Strahlungsempfindliches Material aus

(a) einem Harnstoff- und Urethangruppen sowie Carboxylgruppen enthaltenden ethylenisch ungesättigen Umsetzungsprodukt,

(b) gegebenenfalls einem Photoinitiator oder Photoinitiatorsystem und gegebenenfalls

(c) weiteren Zusatz- und HIlfsstoffen, dadurch gekennzeichnet, daß als Komponente (a) ein Umsetzungsprodukt nach einem der Ansprüche 1 bis 9 eingesetzt wird.

14. Strahlungsempfindliches Material nach Anspruch 13, dadurch gekennzeichnet, daß als Photoinitiatorsystem (b) Benzophenon oder seine Derivate, Hexaarylbisimidazol-Derivate, N-Alkoxypyridinumsalze oder Gemische dieser Verbindungen verwendet werden.

15. Strahlungsempfindliches Material nach Anspruch 13 oder 14, dadurch gekennzeichnet, daß seine Löslichkeit in Wasser oder wäßrig-alkalischer Lösung bei Bestrahlung zunimmt.